# EUROPEAN PATENT SPECIFICATION

(11) **EP 1 042 662 B1**
(45) Date of publication and mention of the grant of the patent: **29.11.2006**
(21) Application number: 98962304.6
(22) Date of filing: 23.12.1998
(51) Int. Cl.: G01N 1/31

(54) **CARTRIDGE DEVICE FOR PROCESSING A SAMPLE MOUNTED ON A SURFACE OF A SUPPORT MEMBER**
KASETTE ZUR BEARBEITUNG EINER AUF DER OBERFLÄCHE EINES TRÄGERS ANGEBRACHTEN PROBE
DISPOSITIF A CARTOUCHE POUR TRAITER UN ECHANTILLON MONTE SUR UNE SURFACE D'UN ELEMENT DE SUPPORT

(30) Priority: 23.12.1997 DK 151697
(43) Date of publication of application: 11.10.2000
(73) Proprietor: Dako Denmark A/S, 2600 Glostrup (DK)
(72) Inventor: BARGOOT, Frederick, G., Wellesley, MA 02181 (US); PLUZEK, Karl-Johan, DK-2765 Sm rum (DK)
(74) Representative: Larsen, Anna
(86) International application number: PCT/DK1998/000580
(87) International publication number: WO 1999/034190

(56) References cited:
- EP-A1- 0 729 021
- EP-A2- 0 310 399
- WO-A2-94/18539

## Description

### Field of the invention

The present invention relates to a cartridge device for processing samples mounted on a surface of a support member. In particular, such samples will be, but are not restricted to being, biological in nature like variously prepared tissue sections, cell smears, cytospins, sections of cell blocks, molds, fungi, bacilli, fine needle aspirates and solutions containing macromolecules such as proteins, deoxyribonucleic acids and ribonucleic acids. Support members may be glass or other microscope slides, microporous or other filtration membranes. The samples of interest may be deposited on or entrapped within such support means. The samples are processed under readily controlled conditions in the cartridge device in preparation for further examination, e.g. with a microscope or other analytical apparatus to quantify the results of the sample processing. The cartridge device of the invention is mainly intended for use in an automated sample processing apparatus or system, but can also be used singly or in groups in a manual processing procedure.

### Background of the invention

Throughout the world there is an increasing demand for examining or studying samples of different types, in particular biological samples such as tissue sections, cell smears, cytospins, sections of cell blocks, molds, fungi, bacilli, fine needle aspirates and solutions containing macromolecules such as proteins, deoxyribonucleic acids and ribonucleic acids. Such samples are usually examined with a microscope or other analytical instruments or apparatus able to detect and/or quantify the presence of particular components, e.g. specific cells, cell types, or cell components, and/or particular compounds, e.g. specific macromolecules like proteins, deoxyribonucleic acid and ribonucleic acid sequences, polysaccharides, etc., in the samples. However, in order to be able to do so with such instruments or apparatus it will usually be necessary to subject the samples to some kind of pretreatment or preprocessing. Thus, if the samples are to be examined with a microscope the samples will have to be placed on a support (e.g. a microscope slide) and stained with one or more reagents so as to allow visualization of particular components or compounds in the samples. The samples may also be processed with one or more reagents which result in the attachment of a chromogenic, luminescent, fluorescent or radioactive probe to a particular component or compound in the samples and the processed samples may then be placed in an apparatus that detects and/or quantifies the amount of attached probe.

However, the work involved in preparing the samples for further examination is in many instances cumbersome, tedious and time consuming, in particular in those cases in which the sample has to be processed consecutively with a plurality of reagents and rinsing fluids in order to obtain the finished specimen ready for the appropriate examination, detection and/or quantification procedure. Therefore, and because the results of the detection and/or quantification procedures become more and more important in the diagnoses of diseases, infections and contaminations all over the world there is also an increasing demand for having the work involved in pretreating the samples before the final examination procedure, rationalized, facilitated, and automated to the largest possible degree, partly in order to make the pretreatments of the samples prior to examination economically feasible and partly in order to be able to perform the necessary large number of pretreatment procedures in a uniform and reproducible form.

Therefore, the prior art already comprises a great number of attempts to construct apparatus and cartridge devices which aim to facilitate and/or automate the pretreating processes of samples of the above type.

Thus, one type of cartridge device which has been commonly used to pretreat samples deposited on microscope slides with a pretreating liquid is an automated apparatus in which microscope slides bearing a sample on one of their sides are successively immersed in a series of pretreating or processing liquids. However, this apparatus requires large amounts of processing liquids and much of these liquids is wasted without being effectively used, which is a serious drawback because many processing liquids are expensive to purchase and to dispose of. Besides, much processing liquid may also be spoiled because it has to be at an elevated temperature for extended periods of time or because it is contaminated with microorganisms introduced from the air or by contact with the microscope slides immersed in the liquids.

In another type of cartridge device for pretreatment of samples deposited on microscope slides processing liquid is brought into contact with the samples by utilizing the wicking effect obtained by enclosing the samples between the sample bearing surfaces of the microscope slides and a plane surface of another object so as to create a processing chamber of capillary dimension perpendicular to the sample bearing surface of the microscope slide, into which the processing liquid will be sucked when the processing liquid is brought into contact with the processing chamber at an edge of the covered microscope slides. The capillary flow may be in either the horizontal or vertical direction.

Thus, sample staining systems based on capillary flow in the vertical direction are disclosed in US patents Nos. 4,731,335 and 5,023,187. A sample to be treated with a treating liquid is placed on one surface of a microscope slide near its one end and a shim such as a double-faced adhesive tape or controlled-thickness paint is placed on the same surface between the sample and the other end of the slide. Then another microscope slide is placed on top of the sample bearing surface and adhered thereto. The shim sandwiched between the surfaces of the two microscope slides defines a space of capillary dimension (e.g. 200 µm). The pair of microscope slide is then inserted into a slot in a holding block in which other similar pairs of microscope slides can be inserted in similar manner. With the free end of the microscope slide pairs facing downwards the holding block is then lowered until the lower free edge of the slide pairs contact a treating liquid, either contained in a vessel or placed as droplets on a plane surface from which the liquid will be wicked into the capillary gap between each pair of slides. When the liquid is to be removed from the space between each slide pair the free edge of each slide pair is brought into contact with an absorbent material which will drain off and absorb the liquid contained in the sample space in each pair of slides. Between the introduction into and removal of the liquid from the sample space in each pair of slides the slide pair holder can be placed in a treating chamber provided with infrared heating means in order to raise the temperature of the treating liquids and accelerate the treatment of the samples. However, the approach disclosed in these US patents for pretreating samples is cumbersome to perform and time consuming to set up for automated processing of large numbers of samples. Besides, it is difficult to obtain well controlled processing conditions like uniform processing temperatures, and to avoid loss of treating liquid (partly due to evaporation) during processing at elevated temperature with this type of cartridge device and methods for pretreating samples.

US patents Nos. 5,068,091 and 5,338,358 disclose a device/apparatus for dyeing tissue samples from living bodies. The device/apparatus comprises a plurality of plateaus or base portions having a flat upper surface and arranged in a parallel disposition. At one end of each plateau or base portion there is a ridge and at the other end of the plateau there is a supporting surface which is slightly higher than the ridge. A glass microscope slide having a tissue specimen attached to one surface is placed on top on each plateau with the tissue specimen facing downwards against the upper surface of the plateau so as to bridge the ridge and the supporting surface such that a thin wedge-shaped capillary gap is defined between the upper surface of the plateau and the lower surface of the microscope slide. Dyeing liquid is dripped from above onto a part of the upper surface of the plateau which is not covered by the slide. The dripped dyeing liquid spreads into the wedge-shaped gap by capillary action, whereby the tissue on the lower surface of the slide is bathed with the liquid and dyed. For cleaning the plateau and the slide after the dyeing operation, cleaning liquid is supplied onto the plateau through a port formed therein. Waste liquid is exhausted through an exhaust port formed in the upper surface of the plateau and exhausted via a pipe connected to the exhaust port. Waste liquid channels are provided around each plateau for draining off waste liquids. - This device/apparatus is intented for use in an automated or manual processing method, but the slide remains stationary and there is no means for removing bubbles, should they form, which yield poor staining results. The method relies on the capillary gap to convey processing fluid to the sample and does not allow for depositing processing fluid directly onto the sample. Further, since the slide is placed upside down in the device, it is difficult to read the slide label and identify the slide once it is inserted into the device.

WO 96/21142 discloses an apparatus for spreading a treating liquid onto a flat surface supporting a cell sample on a part of that surface. This apparatus comprises an element having a flat surface provided with a recessed indentation leaving two parallel rails on each side thereof so that when this element is slid onto a microscope slide a thin cavity is defined between the recessed surface of the element and the surface of the microscope slide leaving an open slot at the front end of the element when the element is slid onto the microscope slide. The front end of the element is bevelled such that in use, when a treating liquid is dispensed onto a sample bearing surface, this liquid will be spread over the sample bearing surface of the microscope slide when the element is slid onto the slide from its one end to the other. The microscope slide may at the one end be provided with a stop member such that a closed cavity is formed when the element is placed fully over the microscope slide. The treating liquid is removed from the microscope slide by retracting the element a distance and applying suction to the cavity at the other transvers short edge of the sample carrying surface of the microscope slide. Thus, when a first treating liquid has been removed a second treating liquid can be dispensed and spread onto the sample carrying surface of the microscope slide in the same manner as the first treating liquid. It may however also be sucked into the cavity with the element only retracted a short distance from the stop member at the one end of the microscope slide. The object of this apparatus is to spread a small volume of liquid on a sample carrying surface of a microscope slide in a controlled manner whilst avoiding or at least reducing the risk of forming any air gaps in the liquid spread. It is said, however, that it may be desirable to move the element back and forth on the microscope slide to provide agitation to the liquid before and/or during the incubation process, which can result in a better penetration of the treatment liquid into the sample and thus provide an improved result. It is also said, that the relative movement of the element and the microscope slide can be automated and controlled by a computer. - However, the cartridge device of this prior art holds the support member, i.e. the microscope slide, in a fixed position whilst moving the element relative to the slide. The element is independent of any other support means supporting the slide in place for the element to move relatively thereto. Thus, the features supporting the slide from its bottom surface, and the element that spreads the treating liquid on and covers the top surface of the slide are two separate parts with separate and independent functions. Hence, the slide cannot be transported whilst enclosed within and protected by the processing chamber formed when the slide support means and the moving element are brought together. Further, when the moving element is fully engaged over the slide, the longitudinal edges of the slide are exposed directly to the ambient air, thus exposing the processing fluid therein to evaporation, particularly at elevated incubation temperatures. Further, it would be a difficult and complex task to control this cartridge device automatically with a robotic mechanism and a computer unless the moving element were fixed to a mechanism which is fixed in the chassis of such a processing apparatus.

WO 96/30124 discloses a support retaining member for use in processing a sample supported on a support member (e.g. a microscope slide) which when assembled together with the support retaining member forms a support cell comprising a substantially sealed chamber, in which the sample on the support member is enclosed, said chamber being provided with a fluid inlet and a fluid outlet for the introduction and removal, respectively, of fluids used in processing the sample. The support retaining member is constructed of two opposed parts, each having a plane surface facing against the opposed part, one of said surfaces being provided with a frame-like surrounding gasket which protrudes above the surface to which it is attached. In operation the sample carrying support member is placed between the two opposed parts of the support retaining member with the sample carrying surface of the support member facing towards that part of the support retaining member carrying the gasket and the two parts of the support retaining member are then clamped together so as to form the substantially sealed chamber in which the sample is enclosed. A processing fluid is then pumped from a reservoir via conduits, valves and the inlet duct to the processing chamber. After processing the sample the processing liquid is pumped out of the processing chamber via the outlet duct to a container for used liquids by the injection of another liquid. A plurality of support retaining members may be combined to an array clamped together by a common clamping means. Such array of support retaining member cells may then be processed in an automated apparatus for processing the samples contained in the cell chambers. - This support retaining member suffers, however, from the drawback that it is a cumbersome task to prepare and assemble each support retaining cell into which the sample carrying support member cannot be inserted or removed in a simple manner and not during the automated processing of the samples. Besides, there may be a considerable waste of reagents due to the fact that all reagents have be to pumped into the sample chamber via possibly long inlet conduits which have to be emptied, rinsed and flushed before a new reagent is introduced into the sample processing chamber. Furthermore, it may also be difficult to control processing conditions such as e.g. the temperature in an array comprising a plurality of such support cells. The design of this cartridge device would be complex, expensive and hence not a candidate to be a single-use disposable item.

WO 94/18539 discloses an apparatus for processing biological materials using ligand pairing, the biological material being mounted on a surface of a substrate (e.g. a microscope slide), said apparatus comprises a housing consisting of two parts having opposed plane surfaces into each of which a recess is provided so that when said parts are assembled and clamped together a cavity is formed in said housing, which cavity has an opening to the surroundings and at least two opposed substantially parallel walls on one of which a spring is attached such that when a substrate is inserted into the cavity through the opening said spring will engage the back surface of the substrate, i.e. that opposed to the surface carrying the biological material, and bias the peripheral borders of the substrate against side and bottom edges surrounding the recess in the opposite wall such as to form a seal between the peripheral borders of the substrate and the edges on the opposite recess thereby forming a first chamber containing the biological material mounted on the substrate surface. - The substrate surface carrying the biological material is spaced from the opposed surface in the recess of the chamber wall a sufficient distance to prevent capillary action from retaining a liquid therebetween. The sample containing chamber is at the opening to the surroundings widened by bevelling the bottom surface of the recess about 45° from the plane of the bottom surface thus creating a second chamber adapted to receive and contain a ligand preparation in the form of a pill or capsule. - Moreover, the housing is provided with ducts or channels for supplying reagent solutions to the first chamber and for draining said reagent solutions off from said first chamber. In use a substrate provided with biological material mounted on one of the substrate surfaces is inserted into the cavity in the housing and a ligand pill or capsule is filled into the second chamber in which it is maintained until it is released by heating the walls of the housing in the second chamber (in case the matrix of the pill or capsule is made of wax or gelatine) or by the introduction of a liquid into the second chamber through the first chamber from a reservoir (in case the matrix of the pill or capsule is made of dissolvable materials like saccharose or starch). Because the housing and thus the substrate is always placed in a vertical position the matrix material or the dissolving liquid, respectively, will flow down into the first chamber and thus contacting the biological material on the substrate. After a selected process time the processing liquid is exhausted through the drainage channels or ducts in the first chamber and the biological material may be rinsed and further treated with other reagent solutions introduced into the first chamber via the supply ducts or channels from particular reservoirs. - The cartridge device of this prior art retains the slide stationary and in vertical orientation, and requires the space above the sample to be larger than capillary dimensions because of the manner in which fluids are introduced and evacuated from the cartridge device. There is no means for eliminating the formation of bubbles, should they form. Ligands and other processing reagents are supplied in an encapsulated form that is ruptured or melted in order to release the fluid and fill the processing chamber. The design of these chambers is complex. The process also requires some associated means, such as heat, to release reagent from its encapsulation into the sample processing space.

Hence, a strong need still remains for a cartridge device or apparatus for processing samples of biological and other materials, which device or apparatus is simple in construction, easy to use and does only require minimum amounts of reagent fluids that may be hazardous to the environment and costly to dispose of, which device or apparatus can be used both in an automated sample processing apparatus or system and in a manual processing procedure, singly as well as in groups, and which overcomes all the drawbacks described above and related to the prior art sample processing devices.

### Disclosure of the invention

The present invention meets the above need in all respects by providing a new cartridge device as defined in the claims. A cartridge device according to the invention for processing a sample mounted on a surface of or entrapped within the matrix of a support member, said device comprises a housing having a top wall (2), a bottom wall (3), side walls (4, 5), a rear wall (6), and a front end wall (7) enclosing a cavity and an aperture at the front end wall of the housing, the aperture providing access for said support member to the interior of the housing, i.e. the cavity, further comprising spacing means (40) attached to a first inner surface of the cavity, said first inner surface being a lower surface of the top wall (2), further comprising elastic means (30, 35), attached to an second inner surface of the cavity, said second inner surface being an upper surface of the bottom wall (3), said elastic means (30,35) for engaging said support member and biasing a sample bearing surface of the support member against said spacing means (40), wherein two compartments are defined when said support member is inserted into the cavity, a first compartment defined by the sample bearing surface of said support member, the first inner surface of the cavity and the spacing means (40), and a second compartment defined by a lower surface of said support member and the remaining inner surface(s) of said cavity (10), characterized in that said spacing means having capillary dimensions, i.e. the thickness of the spacing means (40), in a direction perpendicular to the first inner surface is of capillary dimension, i.e. between 20 and 500 µm, more preferably 25 - 250 µm, and most preferably 100 - 150 µm.

When the cartridge device according to the invention as defined in claim 1 is free of a support member, the device may preferably comprise a housing having a cavity therein defined by a first inner surface being substantially plane at least on a central portion, a second inner surface being substantially plane at least on a central portion, and the inner surface of a border wall, said first and said second inner surfaces are placed faced towards each other and connected to each other by a inner surface of a border wall along at least 75 % of the periphery of the cavity and thereby providing an aperture into said cavity, said first inner surfaces bearing spacing means with a top surface turning away from the first inner surface, the perpendicular distance between the central plan surface of the first inner surface of the support member and a plane defined by the tops of the spacing means being of capillary dimensions, there being provided within said cavity elastic means provided for engaging a plane support member against said spacing means.

When a support member is inserted into the cartridge device the cavity therein is divided into two compartments, wherein a first compartment is defined by a sample-bearing surface of the support member, an inner surface of the cavity including the first inner surface and the spacing means. The distance between the central portion of the first inner surface and the sample-bearing surface of the support member is of capillary dimensions. The second compartment is defined by a lower surface of the support member and the remaining inner surface(s) of the cavity including the second inner surface. The first and the second compartments are in fluid connection via spaces defined by side surfaces of the support member (50) perpendicular to the sample bearing surface of said support member (50) and opposing side surfaces of the cavity (10) and optionally via a space defined by the rear end surface of the support member (50) and the inner surface of the rear wall (6) opposite the aperture (20). The elastic means engage the support member and biasing the sample bearing surface of the support member against the spacing means in the first compartment.

The first and the second inner surfaces of the cavity in the cartridge device are preferably substantially square formed. The periphery of the surfaces may however have one or more protruding parts adapted for supporting and/or guiding a support member. Each of the inner surfaces has a width defining the width of the cavity. The cavity has a depth perpendicular to the aperture and defined as the distance from the aperture to the point of the first inner surface, and having a width being at least as wide as the aperture. The width of the aperture measured as the distance between inner sides of border walls at the periphery and at the aperture may be e.g. 1-4 cm. The width of the aperture should correspond to the width of the support member that is to be used together with the cartridge. The support member has two surfaces, a sample-bearing surface and an opposite surface, and is preferably square formed and have a width, a height and a thickness. The height is defined as the longest distance of a line drawn in plane with the sample bearing surface perpendicular to its width from the edge to edge of the support member.

In a preferred operation a support member, e.g. a microscope slide, is provided with a sample attached to one of its surfaces, e.g. near its centre, and inserted a short distance into the cavity in the housing which, preferably, is oriented such that the sample bearing surface of the support member is situated horizontally. The elastic means in the cavity of the housing will engage the support member and bias the sample-bearing surface of the support member against the spacing means in the first compartment formed in the cavity by the introduction of the support member. A reagent, buffer or rinsing fluid, preferably a liquid, is dispensed onto the sample in a preselected amount and the free end of the support member protruding from the cavity of the house, is pushed a short distance downwards such that a small angle is formed between the inner surface of the first compartment in the cavity and the sample bearing surface of the support member. Then the support member is pushed all the way into the cavity, where the downward directed push on the outer free end of the support member is released, the spring will bias the support member in its full length against the spacing means in the first compartment whereby the liquid dispensed on the sample bearing surface of the support member will be squeezed between the inner surface of the cavity in the first compartment and the sample bearing surface of the support member and spread over the full area of the sample bearing surface of the support member filling up the total volume of the first compartment and immersing the sample completely in the liquid. In preferred embodiments of the cartridge device of the invention there will be fluid communication between the first and second compartments when a support member is inserted into the device, so that possibly excessive fluid will overflow from the first compartment via fluid connection passage(s) to the second compartment where it will be collected. However, only excessive fluid will overflow from the first compartment because the capillary dimension between the first inner surface of the cavity in the first compartment and the sample bearing surface of the support member and the capillary spaces formed between the edges of the support member perpendicular to the sample bearing surface and the first inner surface of the first compartment will retain all the liquid necessary for filling up the first compartment. In order to expel possible air bubbles on or at the edge of the sample, to get the liquid better penetrating into the sample, and to mix the fluid around the sample, the support member may preferably have a length which is longer than the depth of the cavity of the house, so that the support member protrudes a distance from the outside of the housing when said support member is fully inserted into the cavity. The free end of the support member protruding from the housing can be rocked up and down.

Alternatively, in case the first compartment has a free passage to the outside of the housing the support member provided with a sample material and inserted a short distance into the cavity in the housing can be provided with a reagent, buffer or rinsing fluid dispensed directly onto or around the sample through the aperture. The support member can then be pushed parallel with the inner surface of the cavity in the first compartment all the way into the cavity thereby spreading the fluid over the sample and all the area of the sample bearing surface of the support member, excessive fluid may also in this case overflowing into the second compartment when there is fluid connection between the first and the second compartments, while sufficient liquid will be retained in the first compartment to fill its total volume due to the capillary forces acting there.

Finally, the sample bearing support member can be inserted and pushed all the way into the cavity of the housing without beforehand being provided with a processing fluid. When the support member is fully inserted into the cavity of the housing a preselected volume of reagent, buffer or rinsing fluid is then dispensed onto the sample bearing surface of the support member at a slot preferably placed between the sample bearing surface of the support member and the first inner surface of the cavity in the first compartment at the aperture into the cavity of the housing and capillary action will then draw the fluid into the first compartment and fill it up. Both in this third case and the former second case a better spreading of the fluid may be obtained by rocking a free end of the support member at the aperture up and down a few times whereby also possibly entrapped air bubbles will be expelled.

Optionally, the support member can also be pulled out and pushed in a short distance a few times in order to obtain better spreading of the fluid, better penetration of fluid into the sample material, better mixing of reagent, and elimination of air bubbles.

Thus it is seen that the cartridge device according to the present invention will only require a very small volume of processing fluid in order to completely cover and penetrate the sample material on the support member. Excessive processing fluid is collected in the second compartment of the cavity and is contained within the device, from which potentially hazardous material can be drained, and air bubbles occurring in the first compartment are easily and effectively expelled. In addition, the device can be handled and operated in a very easy and simple manner that assures uniform sample processing whilst protecting the user from contact with the processing fluids.

That the dimension of the first compartment perpendicular to the sample bearing surface of the support member and the inner surface of the cavity in said first compartment is of capillary size means that a capillary effect is exerted on fluids introduced into the compartment such as to retain them therein in addition to minimizing processing fluid volumes. The capillary dimension is from 20 - 500 µm, preferably 25 - 250 µm, and most preferably 100 - 150 µm.

Furthermore, as there is only a small slot, if any, at the aperture opening into the first compartment the evaporation of processing liquid in the first compartment to the surroundings will be at a minimum.

In many cases the sample to be processed is entrapped within or deposited on a substrate such as a microporous or other filtration membrane or in gels (e.g. SDS-PAGE). Specimens of such preparations can then be attached to a support member. Support members may be glass or other microscope slides, microporous or other sufficiently stiff filtration membranes. The samples of interest are deposited on or may be entrapped directly within such support means. In any case the samples are processed under readily controlled conditions in the device of the present invention in preparation for further examination, e.g. with a microscope or other analytical apparatus to detect or quantify the results of the sample processing. For example, if the sample processing results in the attachment of a fluorescent probe to a component of the sample, the processed sample, on its support, may be placed in an apparatus that quantifies the fluorescence emitted by said attached probe. Further, if the sample processing results in the deposition of a visible dye to a component of the sample, then the sample, on its support, may be placed under a microscope for visual examination.

When excessive processing fluid overflows into the second compartment, where it is collected, it may serve to humidify the upper compartment and/or further minimize evaporation of fluid from the first compartment.

In addition to removing gas bubbles from and distributing processing fluid within the first compartment an oscillating movement of the support member in a direction parallel to the introduction direction of the support member substantially perpendicular to the aperture into the housing, i.e. pulling outward and pushing inward a support member in the cavity in the housing, or an oscillating movement of the support member in a direction perpendicular to the introduction direction of the support member, i.e. tilting the slide downward and up against the elastic means supporting the support member, can also be used for assisting removal of processing fluid from the first compartment, in particular when a vacuum is applied to the cavity in the housing via fluid outlets.

Particularly preferred embodiments of the cartridge device according to the invention are defined in the attached subclaims 2-21, the particular advantages obtained therewith will shortly be explained in the following.

The embodiment defined in claim 2 provides the advantage that the volume of processing fluid is minimized whilst securing a particularly even distribution of a processing fluid throughout said first compartment. This embodiment is particularly suitable for processing samples on microscope slides. In the device according to claim 2, the spacing means are preferably designed as a border line elevation extending along substantially the whole of the border line of the first inner surface of the cavity except the border line along the periphery of the aperture.

In a preferred embodiment the first compartment in substantially its full width and height has a free passage to the outside of the housing through the aperture. The height of the first compartment is defined as the distance between the inner surface of the cavity and the sample bearing surface of the support member The embodiment is advantageous in that the free passage from the first compartment to the outside of the housing through the aperture avoids the risk that the sample mounted on the support surface is scraped off at the insertion of the support member into the cavity. Besides, it also allows for the introduction of a processing fluid by dispensing the fluid onto the sample bearing surface of the support member at the slot formed at the aperture between the sample bearing surface of the support member and the inner surface of the cavity in the first compartment whether the support member is partially or fully inserted into the cavity.

The embodiment defined in claim 4 is advantageous in that it provides fluid connection between the first and the second compartment, that is uncomplicated in design and functionally safe and allows for collection of any excess fluid from the first compartment into the second compartment while maintaining fluid uniformly distributed throughout the first compartment. The embodiment of claim 5 provides means for removing used and/or excess processing and rinsing fluids from the second compartment and the first compartment, preferably by applying a vacuum to the fluid outlet and/or drainage passages which makes it particularly suitable for performing a series of treatments with different processing, buffering, and rinsing fluids. The embodiment of claim 6 constitutes the preferred manner in which the elastic means is positioned in the cavity of the housing and exerts its biasing function on the support member because it is constructive simple and functional sturdy. In a preferred embodiment the elastic means is of such nature and so located in the said second compartment that the sample bearing support member can be easily inserted, removed, or partially removed from the cavity, and such that application and release of a force applied substantially perpendicular to the sample bearing surface of the support member on the end at the aperture of said support member inserted into said cavity of the housing through the aperture aids flow, distribution and/or exhaust of a fluid present in the first compartment. Preferably the end of the sample bearing support member protrudes through the aperture a distance outside of the housing when said support member is fully inserted into the cavity in the housing, i.e. the relative length of the support member and the distance to which it can be inserted in a cavity of the housing is such that a distance of the support member always protrudes from the outside of the housing which makes it easy to manipulate and operate the support member, the protruding distance of the support member being available for the application of pushing, pulling, tilting, and rocking (oscillating) forces. Besides, the protruding distance of the support member can also be used as a shelf onto which processing liquid is applied at the slot into the first compartment from which it can be drawn into that compartment by the action of capillary forces. In the embodiment of claim 7 the elastic means in the second compartment comprises a flat curved spring (30). According to claim 8 the one end (31) of the flat curved spring (30) is fixed to an inner surface of the second compartment remote from the aperture (20) in the housing. Claims 7 and 8 define very practical and preferred embodiments of the elastic means because they represent a constructive very simple, functionally safe and economically inexpensive manner of how to obtain an excellent biasing functionality forcing the sample bearing support member against the spacing means in the first compartment such that it is easy to rock or oscillate the free end of the support member at the aperture of the housing. Claim 10 defines a still simple and inexpensive manner of how to obtain the biasing function against the support member, but because the embodiment of the elastic means defined in this claim in some respect is more complex and sophisticated the elastic force exerted against the support member can be better controlled. Besides, by using cheap massive or foam rubber pads or pieces as the elastic means economical advantages are obtained in the production of the cartridge device according to the invention.

When providing a sheet member on top of the elastic members defined in claim 10 as stated in claim 11 a resilient shelf member is formed in the cavity of the housing which may function as a guiding member when inserting the support member into the cavity and thus makes this operation of the support member very easy and safe.

The cartridge device according to claim 12, wherein the height of the aperture is substantially greater than the thickness of the support member (50). Thereby the dimension of the aperture into the cavity of the housing perpendicular to the sample bearing surface of the support member when inserted into said cavity is of such size that it is possible to depress the free end of the support member so that its sample bearing surface forms an angle with the inner surface of said cavity in the first compartment, i.e. the said dimension is larger than the thickness of the support member perpendicular to the sample bearing surface thereof, makes it easy to introduce the support member into the cavity of the housing in a direction forming an oblique angle with the inner surface of the cavity in the first compartment, thus avoiding the risk of mechanical damage of the sample on the support member by possible contact with the edge of the inner surface of the cavity. This embodiment makes it also possible to for up and down rocking or oscillating movements of the free end of the support member perpendicular to the sample-bearing surface thereof.

An embodiment of the cartridge device of the invention in which a fixed support means for the sample bearing support member is provided at the rear end of the cavity opposite the aperture of the housing in the form of a ridge, crest, cam, or separate protrusions as stated in claim 13 provides additional support for the support member and restricts the motion of the rear end of the support member when performing a tilting or an oscillating movement, perpendicular to the sample bearing surface of the support member, of the free end of said support member at the aperture into the cavity in the housing when said sample bearing support member is fully inserted into said cavity, in particular when said support member is a microscope slide.

By providing a flexible curtain or resilient closing member at the aperture into the cavity of the housing so as to contact and bias against the "bottom" surface of the support member as defined in claim 14 the evaporation of liquids in the second compartment of the cavity of the housing will be diminished and thus also the evaporation of processing liquid from the first compartment, when said first compartment being in fluid communication with the second compartment. Besides, when applying vacuum to an outlet duct provided in the second compartment such vacuum will exert its suction effect in the first compartment via the fluid communication passages between the first and the second compartment thus exhausting processing fluids present in the first compartment or assisting in drawing new processing fluids (e.g. rinsing fluids) dispensed on the sample bearing surface at the aperture into the first compartment.

Means for controlling the temperature of the sample and processing fluid within the space of capillary dimensions as defined in claim 15 makes it possible to accelerate, decelerate or quench the reaction taking place between components in the sample and reagent(s).

By providing electrical or water circulating heating (or cooling) means and temperature sensing means in the very wall of the housing forming the one surface of the first compartment as stated in claims 16 and 17 it will be possible to control the temperature of the processing liquid and the reaction time in a simple manner using computer programming procedures. Such features are of particular importance when the cartridge device of the invention is used in an automated processing apparatus or system.

Because the thermal energy, which will be supplied to the processing liquid in the first compartment, will be communicated thereto from the wall of the housing constituting one surface of the first compartment it is very advantageous that this wall is made of a material having good thermal conductivity like metallic aluminium and stainless steel as defined in claim 18, because these features will maximize the possibility of quick and effective changing the temperature of processing liquid and sample in the first compartment, particularly because the fluid contained within the space of capillary dimensions is of such small volume.

By shaping the housing, the cavity therein, and the aperture into the housing as defined in claim 19 a device is obtained which will be easy to produce and well suitable for many practical applications, in particular those in which the support member is a microscope slide and those in which a plurality of devices is combined into an assembly for use in multisample processing procedures.

Plastic materials such as mentioned in claim 20 are preferred for the production of a housing because these materials are inert to most reagent fluids, easy to mould and/or machine into the finished shape, and are available in bulk quantities at an economical price.

Claim 21 states that the first inner surface of the cavity (i.e. inner surface of top wall 2) is substantially plane at least on a central portion.

An assembly comprising a plurality of devices according to the invention as defined in claims 22-24 is indeed of great importance when processing a multiplicity of samples, it be by manual procedures or in an automated processing apparatus or system. In particular the assembly embodiment defined in claim 23 is believed to be especially applicable in practise.

Finally, it should also be mentioned that the housing of the cartridge device according to the invention is preferably self-contained.

### Detailed description of the invention

The invention will now be further described and explained with reference to the drawings wherein:
Fig. 1 is a perspective view of a preferred rectangular box-shaped embodiment of the cartridge device of the invention,
Fig. 2 is a front elevation of the embodiment of the device shown in fig. 1 as seen from the aperture side of the housing,
Fig. 3 is a front view of another embodiment of the device of the invention as seen from the aperture side of the housing,
Fig. 4 is a perspective view of an assembly of a plurality of devices according to the invention as that illustrated in fig. 1.

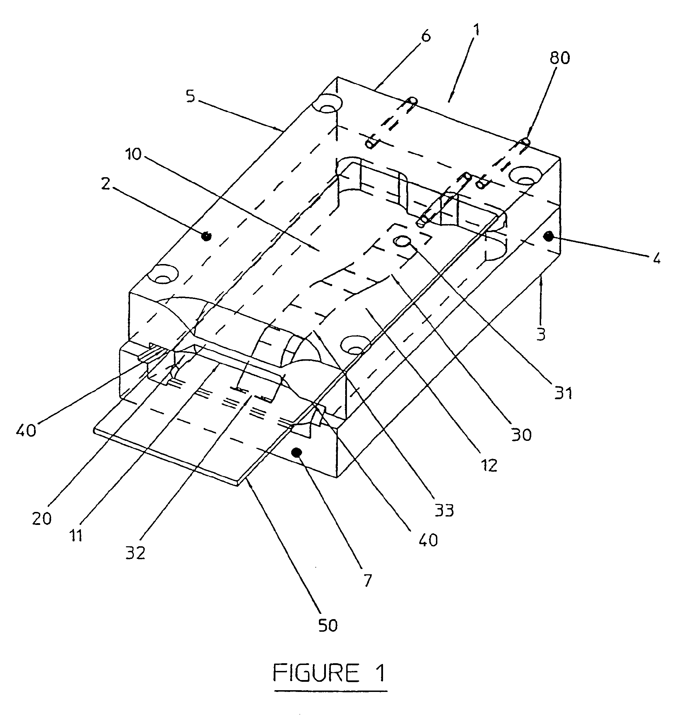

In fig. 1, which represents a perspective view of a preferred embodiment of the cartridge device of the invention, 1 denotes a rectangular box-shaped housing in which there is a rectangular box-shaped cavity 10. The housing, which for illustration purposes is thought to be made of a transparent material like polycarbonate or polymethyl metacrylate so it is possible also to see the features and members within the cavity of the housing, has a top wall 2, a bottom wall 3, side walls 4,5, a rear wall 6, and a front end wall 7. At the front end of wall 7 of the housing there is an aperture denoted 20 providing access to the interior of the housing, i.e. the cavity 10. In the housing there is an elastic means in the form of a flat curved spring 30, the one end 31 of which is fixed to the inner bottom surface of the cavity in the housing at its rear end, i.e. opposite to and remote from the aperture in the housing, whereas the other end of the spring 32 is free and abuts against the interior face of front end wall 7 while resting on the interior of the bottom wall 3. Between ends 31 and 32, spring 30 is bent to form a single apex 33 near the aperture 20 and the inner surface of the top wall 2. Spacing means 40 is provided at and attached to the inner surface of the top wall 2. A flat, plane, sample bearing support member 50 (e.g. a microscope slide) is inserted all the way into the cavity thus dividing the cavity in a first compartment 11 containing the sample to be processed on the upper surface of the support member 50 and a second compartment 12 containing the flat, curved spring 30. The apex 33 engages with and biases against the lower surface of the sample bearing support member so as to bias the upper surface of the support member against the spacing means 40 in the first compartment, the spacing means being of such size, form and configuration that the dimension of the first compartment perpendicular to the upper surface of the support member and the inner surface of the top wall 2, i.e. the upper inner surface of the cavity, is of capillary dimensions. Because the spacing means do not extend transversally across the upper inner surface of the cavity at the aperture there is free passage from the interior of the first compartment 11 to the outside of the housing via a slot also denoted 11. Because the height of the aperture 20 is substantially greater than the thickness of the support member, and the flat curved spring is only attached to the bottom surface of the cavity at the rear end in said cavity, whereas the apex of the spring near the aperture is freely movable it is easy to push down the free end of the support member, either when inserting the support member 50 into the cavity or withdrawing it therefrom. Besides, it is also easy to carry out a rocking up and down movement of the free end of the support member, it being partly or fully inserted into the cavity. At the rear end of the housing outlet duct(s) 80 is (are) provided for applying a vacuum to the second compartment in the cavity of the housing. However, outlet duct(s) being direct connected to the first compartment could also be provided.

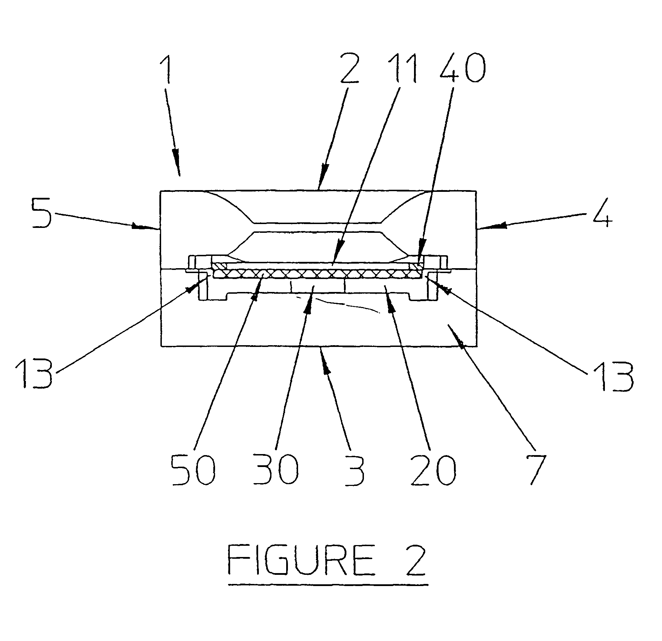

In fig. 2, which is a front view of the embodiment of the cartridge device according to the invention shown in fig. 1, the same reference numbers as those indicated in fig. 1 have the same meanings as explained above. Besides, because the spacing means do not extend integrally along the inner top surface of the cavity but is interrupted by free passages to the side walls of the cavity and because there is a free gap 13 along the side edges of the support member and the inner surfaces of the side walls 4, 5 of the housing there is free fluid communication between the first compartment and the second compartment, so that fluid introduced into the first compartment is only retained therein by the action of capillary forces.

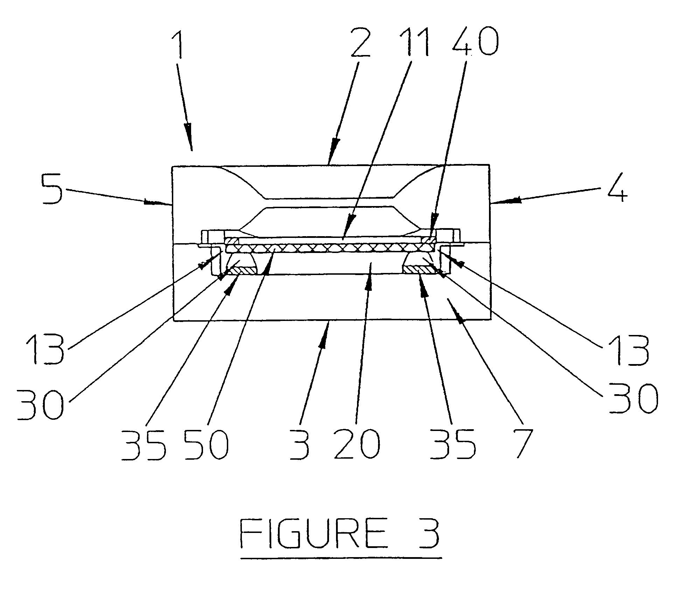

In fig. 3, which is a front view of another embodiment of the-cartridge device according to the invention, the same reference numbers as those indicated in figs. 1 and 2 have the same meanings as explained above. Further, in this embodiment the flexible means is provided in the form of a plurality of elastic members, e.g. helical or flat springs, or massive or foam rubber pads or pieces, which are supported on two, in cross-section rectangular crests or support shelves 35 extending along and attached to the inner side surfaces of the walls 4,5, and optionally 3 of the housing 1. Only the two elastic members nearest the aperture in the housing are shown, but at least two more, one at each side of the cavity, are located more remotely in the cavity behind the two members shown. Alternatively or additionally fixed support means could be provided on the inner surface of the rear end wall 6 of the housing for supporting the rear end of the support member 50 when said support member is fully inserted into the cavity of the housing.

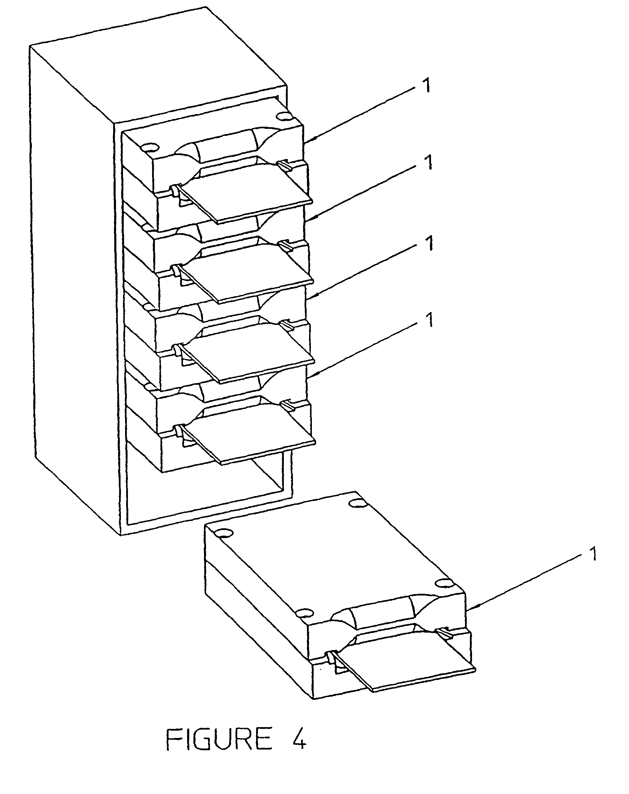

In fig. 4, which is a perspective view of an assembly comprising a plurality of the cartridge devices shown in fig. 1, the devices are arranged vertically, i.e. in a one above the other relationship. The reference numbers indicated have the same meaning as explained above.

In use the embodiments of the cartridge device of the present invention illustrated above will be operated as described previously in the introductory part of this specification. A more detailed example of such operation is described below.

### Initial set-up

1. A glass microscope slide having a frosted end and provided with a sample on one of its surfaces is removed from buffer and inserted about 2 cm into the cavity of the housing in order for the apex of the spring to engage the slide surface opposite to the sample bearing surface.
2. The housing is oriented such that the sample-bearing surface of the support member is horizontal. If vertical, liquid applied on the protruding outer sample bearing surface of the support member could run off and drip down.
3. Buffer liquid is dispensed onto the sample at the entrance to the aperture into the housing. Liquid will spread to the end of the slide within the cavity of the housing (due to capillary action) with the remainder accumulating at the junction between the exposed slide surface and the entrance into the cavity.
4. The slide is inserted into the cavity of the housing, distributing the liquid over the sample specimen in the space of capillary dimension above the upper surface of the slide. Liquid will flow around the sides of the slide, but because of the very small space between the slide surfaces and the inner walls of the cavity, liquid held in the first compartment by capillary action will act as a barrier to flow into the lower compartment of the cavity.

### Add reagent

1. Apply vacuum to drainage ports in the cavity.
2. Depress/release frosted end of the slide a few, e.g. three times to assist in draining off above buffer on top of and around the sides of the slide.
3. Discontinue vacuum.
4. Remove slide to expose all but about 2 cm of its surface which remains engaged in the cavity of the housing.
5. Dispense reagent (100-150 µl) onto tissue, starting at the entrance to the cavity of the housing and moving towards the frosted end of the slide.
6. Insert slide all the way into the cavity of the housing and incubate.

### Rinse

1. Repeat steps 1-4 above.
2. Dispense rinse fluid as in #5 above.
3. Insert slide all the way into the cavity of the housing.
4. Repeat steps 1-3 two more times.

### Add reagent etc.

Rather than remove the slide and add reagent or rinse solution directly onto the sample, the invention allows for elimination of step 4 and step 6 in the add reagent procedure above, and dispensing reagent directly to the slide at the entrance to the cavity of the housing thereby allowing capillary action to suck fluid over the sample on the slide.

Each incubation procedure will usually take about 5-30 minutes, whereas each rinsing procedure will take about 3 x 20 seconds. Typically about 4-5 processing procedures will be involved in the preparation of a sample for further examination, but the device will be quite as suitable for only one processing procedure or a multiplicity of processing procedures.

Thus, having described the invention in both general and detailed terms the scope of the invention for which protection is applied, is defined in the attached claims.

## Claims

1. A cartridge device adapted for processing a sample mounted on a surface of or entrapped within the matrix of a support member, said device comprising:
a housing (1) having a top wall (2), a bottom wall (3), side walls (4, 5), a rear wall (6), and a front end wall (7) enclosing a cavity (10), and an aperture (20) at the front end wall (7) of the housing, the aperture providing access for said support member to the interior of the housing, i.e. the cavity (10),
spacing means (40) attached to a first inner surface of the cavity, said first inner surface being a lower surface of the top wall (2),
elastic means (30, 35), attached to a second inner surface of the cavity, said second inner surface being an upper surface of the bottom wall (3), said elastic means (30, 35) for engaging said support member and biasing a sample bearing surface of the support member against said spacing means (40);
wherein two compartments are defined when said support member is inserted into the cavity, a first compartment defined by the sample bearing surface of said support member, the first inner surface of the cavity and the spacing means (40), and a second compartment defined by a lower surface of said support member and the remaining inner surface(s) of said cavity (10),
**characterized in that** said spacing means (40) having capillary dimensions, i.e. the thickness of the spacing means (40), in a direction perpendicular to the first inner surface is of capillary dimension, i.e. between 20 and 500 µm, preferably 25 - 250 µm, and most preferably 100 - 150 µm.

2. A cartridge device according to claim 1, wherein the first inner surface of the cavity (10) is a substantially plane surface.

3. A cartridge device according to claim 1 or 2, wherein the width of the aperture (20) substantially corresponds to the width of the cavity (10).

4. A cartridge device according to any of claims 1-3, and further comprising a support member (50) inserted into said cavity (10) so as to define said two compartments,
wherein the first and the second compartments are in fluid connection via spaces defined by side surfaces of the support member (50) perpendicular to the sample bearing surface of said support member (50) and opposing side surfaces of the cavity (10) and optionally via a space defined by the rear end surface of the support member (50) and the inner surface of the rear wall (6) opposite the aperture (20).

5. A cartridge device according to 4, wherein the second compartment and optionally also the first compartment in the cavity of the housing is (are) provided with fluid outlet and/or drainage passage(s) for removing used and/or excess processing and rinsing fluid(s) from the compartments.

6. A cartridge device according to claim 5, wherein the elastic means is located in the second compartment and engages and biases against the lower surface of the support member (50).

7. A cartridge device according to claim 6, wherein said elastic means in the second compartment comprises a flat curved spring (30).

8. A cartridge device according to claim 7, wherein the one end (31) of the flat curved spring (30) is fixed to an inner surface of the second compartment remote from the aperture (20) in the housing, whereas the other end of the spring is fixed or free and is configured so that a part of the curved flat spring engages with and biases against the sample bearing support member.

9. A cartridge device according to claim 8, wherein the other end (32) of the spring (30) abuts against the interior face of front end wall 7 while resting on the inner bottom surface of the cavity, i.e. inner surface of the bottom wall (3).

10. A cartridge device according to any of claims 5 - 9, wherein the elastic means in the second compartment is an arrangement of elastic members selected from the group comprising helical and flat springs, solid and foam rubber pads or pieces, of which at least a part of each is attached to the inner surface of the bottom wall (3), whereas another part of each elastic member protrudes towards and engages with and biases against the sample bearing support member (50), and wherein the elastic force of the spring(s), pads or pieces located proximate the aperture in the housing being substantially lower than that of the spring(s), pads or pieces more remote from the aperture in the compartment.

11. A cartridge device according to claim 10, wherein free part(s) (33) of the elastic members (30) extending towards the sample bearing support member (50) in the second compartment is (are) covered by a sheet member.

12. A cartridge device according to any of the preceding claims, wherein the height of the aperture is substantially greater than the thickness of the support member (50).

13. A cartridge device according to any of the preceding claims 4-12, wherein a fixed support means for a sample bearing support member (50) is provided at the rear end of the cavity, opposite the aperture of the housing, the support means being in the form of a ridge, crest, cam, or separate protrusions, which support the rear end of the support member (50) when it is fully inserted into the cavity in the housing.

14. A cartridge device according to any of the preceding claims 4-13, wherein a flexible curtain or resilient closing member is provided at the aperture so as to contact and bias against the lower surface of the support member (50) such that the second compartment is substantially sealed at the aperture from the outside surroundings.

15. A cartridge device according to any of the preceding claims 4-14, wherein means for controlling the temperature of any fluid(s) and the sample in the first compartment is provided.

16. A cartridge device according to claim 15, wherein the means for controlling the temperature comprises electrical heating means and temperature sensing means provided in one or more of the walls of the housing forming the surface(s) of the first compartment.

17. A cartridge device according to claim 15, wherein the means for controlling the temperature comprises circulating water means and temperature sensing means provided in one or more of the walls of the housing forming the surface(s) of the first compartment.

18. A cartridge device according to any of the claims 15-17, wherein wall(s) of the housing providing the surface(s) of the first compartment or part thereof is (are) made of a material having good thermal conductivity, e.g. a metal like aluminium and stainless steel.

19. A cartridge device according to any of the preceding claims, wherein the housing and the cavity therein is rectangular box-shaped and the aperture in the housing is rectangular.

20. A cartridge device according to claim 1, wherein the housing is made of a plastic like e.g. polystyrene, polymethylmethacrylates, polycarbonates (plexiglass, lexan), and polyethersulfones.

21. A cartridge device according to claim 1, wherein the first inner surface of the cavity, i.e. inner surface of top wall 2, is substantially plane at least on a central portion.

22. An assembly comprising a plurality of cartridge devices according to any of claims 1-21 stacked vertically, i.e. in a one above the other relationship.

23. An assembly comprising a plurality of cartridge devices according to any of claims 1-21 arranged horizontally, i.e. in a side-by-side relationship.

24. An assembly comprising a plurality of cartridge devices according to any of claims 1-21 arranged both horizontally and vertically in a box-arrangement.

## Patentansprüche

1. Kassettenvorrichtung, die ausgelegt ist, um eine Probe zu behandeln, die auf einer Oberfläche der Matrix eines Trägerbauteils oder in dieser eingeschlossen befestigt ist, wobei die Vorrichtung umfasst:
ein Gehäuse (1) mit einer oberen Wand (2), einer unteren Wand (3), Seitenwänden (4, 5), einer hinteren Wand (6) und einer vorderen Endwand (7), die einen Hohlraum (10) umschließen, und einer Öffnung (20) an der vorderen Endwand (7) des Gehäuses, wobei die Öffnung einen Zugang für das Trägerbauteil zu dem Innenraum des Gehäuses, d. h. der Hohlraum (10) bereitstellt,
eine Abstandseinrichtung (40), die an einer ersten inneren Oberfläche des Hohlraums angebracht ist, wobei die erste innere Oberfläche eine untere Oberfläche der oberen Wand (2) ist,
eine elastische Einrichtung (30, 35), die an einer zweiten inneren Oberfläche des Hohlraums angebracht ist, wobei die zweite innere Oberfläche eine obere Oberfläche der unteren Wand (3) ist, die elastische Einrichtung (30, 35) dazu dient, um an dem Trägerbauteil anzugreifen und eine probentragende Oberfläche des Trägerbauteils gegen die Abstandseinrichtung (40) vorzuspannen;
wobei zwei Fächer definiert sind, wenn das Trägerbauteil in dem Hohlraum eingesetzt ist, ein erstes Fach, das durch die probentragende Oberfläche des Trägerbauteils die erste innere Oberfläche des Hohlraums und die Abstandseinrichtung (40) definiert ist, und ein zweites Fach, das durch eine untere Oberfläche des Trägerbauteils und die übrige(n) innere(n) Oberfläche(n) des Hohlraums (10) definiert ist,
**dadurch gekennzeichnet, dass** die Abstandseinrichtung (40) kapillare Abmessungen aufweist, d. h. die Dicke der Abstandseinrichtung (40) in einer Richtung senkrecht zu der ersten inneren Oberfläche ist von kapillarer Abmessung, d. h. zwischen 20 und 500 µm, vorzugsweise 25 - 250 µm und am meisten bevorzugt 100 - 150 µm.

2. Kassettenvorrichtung nach Anspruch 1, bei der die erste innere Oberfläche des Hohlraums (10) eine im Wesentlichen ebene Oberfläche ist.

3. Kassettenvorrichtung nach Anspruch 1 oder 2, bei der die Breite der Öffnung (20) im Wesentlichen der Breite des Hohlraums (10) entspricht.

4. Kassettenvorrichtung nach einem der Ansprüche 1 bis 3 und ferner mit einem Trägerbauteil (50), das in den Hohlraum (10) eingesetzt ist, um so die zwei Fächer zu definieren, wobei die ersten und die zweiten Fächer über Räume, die von seitlichen Oberflächen des Trägerbauteils (50) senkrecht zu der probentragenden Oberfläche des Trägerbauteils (50) und gegenüber liegenden seitlichen Oberflächen des Hohlraums (10) definiert sind, und optional über einen Raum in Fluidverbindung stehen, der durch die hintere Endoberfläche des Trägerbauteils (50) und der inneren Oberfläche der hinteren Wand (6) gegenüber der Öffnung (20) definiert ist.

5. Kassettenvorrichtung nach Anspruch 4, bei der das zweite Fach und optional auch das erste Fach in dem Hohlraum des Gehäuses mit einem Fluidauslass und/oder (einem) Drainagendurchga(ä)nge(n) versehen ist (sind), um gebrauchte(s) und/oder überflüssige(s) Bearbeitungs- und Spülfluid(e) aus den Fächern zu entfernen.

6. Kassettenvorrichtung nach Anspruch 5, bei dem die elastische Einrichtung in dem zweiten Fach angeordnet ist und an der unteren Oberfläche des Trägerbauteils (50) angreift und gegen diese vorspannt.

7. Kassettenvorrichtung nach Anspruch 6, bei der die elastische Einrichtung in dem zweiten Fach eine flache gekrümmte Feder (30) umfasst.

8. Kassettenvorrichtung nach Anspruch 7, bei der ein Ende (31) der flachen gekrümmten Feder (30) an einer inneren Oberfläche des zweiten Fachs entfernt von der Öffnung (20) in dem Gehäuse befestigt ist, wohingegen das andere Ende der Feder festgelegt oder frei ist und so konfiguriert ist, dass ein Teil der gekrümmten flachen Feder an dem eine probetragenden Trägerbauteil angreift und gegen dieses vorspannt.

9. Kassettenvorrichtung nach Anspruch 8, bei der das andere Ende (32) der Feder (30) an die innere Stirnfläche der vorderen Endwand (7) angrenzt, wobei es an der inneren unteren Oberfläche des Hohlraums, d. h. innere Oberfläche der unteren Wand (3), ruht.

10. Kassettenvorrichtung nach einem der Ansprüche 5 bis 9, bei der die elastische Einrichtung in dem zweiten Fach eine Anordnung elastischer Bauteile ist, die aus der Gruppe ausgewählt sind, die wendelförmige und flache Federn, feste und Schaumgummikissen oder -stücke umfasst, von denen wenigstens ein Teil von jedem an der inneren Oberfläche der unteren Wand (3) angebracht ist, wohingegen ein anderer Teil jedes elastischen Bauteils in Richtung auf das probentragende Trägerbauteil (50) hin vorragt und an diesem angreift und gegen dieses vorspannt, und bei der die elastische Kraft der Feder(n), Kissen oder Stücke, die in der Nähe der Öffnung in dem Gehäuse angeordnet sind, im Wesentlichen kleiner als die der Feder(n), Kissen oder Stücke weiter entfernt von der Öffnung in dem Fach ist.

11. Kassettenvorrichtung nach Anspruch 10, bei der (ein) freier Teil(e) (33) der elastischen Bauteile (30), der (die) sich in Richtung auf das probentragende Trägerbauteil (50) in dem zweiten Fach hin erstreckt(en), durch ein Schichtbauteil bedeckt ist (sind).

12. Kassettenvorrichtung nach einem der vorherigen Ansprüche, bei der die Höhe der Öffnung wesentlich größer als die Dicke des Trägerbauteils (50) ist.

13. Kassettenvorrichtung nach einem der vorherigen Ansprüche 4 bis 13, bei der eine fixierte Trägereinrichtung für ein probentragendes Trägerbauteil (50) an dem hinteren Ende des Hohlraums gegenüber der Öffnung des Gehäuses vorgesehen ist, wobei die Trägereinrichtung in der Form einer Rippe, Kamms, Nockens oder getrennter Vorsprünge ist, die das hintere Ende des Trägerbauteils (50) trägt bzw. tragen, wenn es vollständig in dem Hohlraum des Gehäuses eingebracht ist.

14. Kassettenvorrichtung nach einem der vorherigen Ansprüche 4 bis 13, bei der ein flexibler Vorhang oder ein elastisches Schließbauteil an der Öffnung vorgesehen ist, um die untere Oberfläche des Trägerbauteils (50) zu kontaktieren und gegen diese vorzuspannen, so dass das zweite Fach an der Öffnung gegenüber den äußeren Umgebungen im Wesentlichen abgedichtet ist.

15. Kassettenvorrichtung nach einem der vorherigen Ansprüche 4 bis 14, bei der eine Einrichtung vorgesehen ist, um die Temperatur von Fluid(en) und der Probe in dem ersten Fach zu steuern.

16. Kassettenvorrichtung nach Anspruch 15, bei der die Einrichtung zum Steuern der Temperatur eine elektrische Erwärmungseinrichtung und eine Temperaturmesseinrichtung umfasst, die in einer oder mehreren der Wände des Gehäuses vorgesehen sind, die die Oberfläche(n) des ersten Fachs bildet bzw. bilden.

17. Kassettenvorrichtung nach Anspruch 15, bei der die Einrichtung zum Steuern der Temperatur eine Einrichtung zum Zirkulieren von Wasser und eine Temperaturmesseinrichtung umfasst, die in einer oder mehreren der Wände des Gehäuses vorgesehen sind, die die Oberfläche(n) des ersten Fachs bildet bzw. bilden.

18. Kassettenvorrichtung nach einem der Ansprüche 15 bis 17, bei der (eine) Wa(ä)nd(e) des Gehäuses, die die Oberfläche(n) des ersten Fachs oder von Teilen davon bereitstellen, aus einem Material mit guter thermischer Leitfähigkeit hergestellt ist (sind), z. B. ein Metall, wie Aluminium und rostfreier Stahl.

19. Kassettenvorrichtung nach einem der vorherigen Ansprüche, bei der das Gehäuse und der Hohlraum darin rechteckig schachtelförmig sind und die Öffnung in dem Gehäuse rechteckig ist.

20. Kassettenvorrichtung nach Anspruch 1, bei der das Gehäuse aus einem Kunststoff hergestellt ist, wie z. B. Polystyren, Polymethylmethacrylate, Polycarbonate (Plexiglas, Lexan) und Polyethersulfone.

21. Kassettenvorrichtung nach Anspruch 1, bei der die erste innere Oberfläche des Hohlraums, d. h. die innere Oberfläche der oberen Wand (2), wenigstens an einem zentralen Bereich im Wesentlichen plan ist.

22. Anordnung mit einer Mehrzahl von Kassettenvorrichtungen nach einem der Ansprüche 1 bis 21, die vertikal gestapelt sind, d. h. eine über einer anderen.

23. Anordnung mit einer Mehrzahl von Kassettenvorrichtungen nach einem der Ansprüche 1 bis 21, die horizontal angeordnet sind, d. h. eine seitlich neben einer anderen

24. Anordnung mit einer Mehrzahl von Kassettenvorrichtungen nach einem der Ansprüche 1 bis 21, die sowohl horizontal als auch vertikal in einer Schachtelanordnung angeordnet sind.

## Revendications

1. Dispositif à cartouche pour traiter un échantillon monté sur une surface ou enfermé à l'intérieur de la matrice d'un élément de support, ledit dispositif comprenant :
un logement (1) ayant une paroi supérieure (2), une paroi inférieure (3), des parois latérales (4, 5), une paroi arrière (6), et une paroi d'extrémité avant (7) enfermant une cavité (10), et une ouverture (20) au niveau de la paroi d'extrémité avant (7) du logement, l'ouverture fournissant un accès audit élément de support à l'intérieur du logement, c'est à dire la cavité (10),
des moyens d'espacement (40) attachés à une première surface interne de la cavité, ladite première surface interne étant une surface inférieure de la paroi supérieure (2),
des moyens élastiques (30, 35), attachés à une seconde surface interne de la cavité, ladite seconde surface interne étant une surface supérieure de la paroi inférieure (3), lesdits moyens élastiques (30, 35) étant destinés à venir en prise avec ledit élément de support et à fléchir ou mettre sous contrainte une surface portant un échantillon de l'élément de support contre lesdits moyens d'espacement (40) ;
dans lequel deux compartiments sont définis lorsque ledit élément de support est inséré dans la cavité, un premier compartiment défini par la surface portant l'échantillon dudit élément de support, la première surface interne de la cavité et les moyens d'espacement (40), et un second compartiment défini par une surface inférieure dudit élément de support et la/les surface(s) interne(s) restante(s) de ladite cavité (10),
**caractérisé en ce que** lesdits moyens d'espacement (40) ont des dimensions capillaires, c'est à dire que l'épaisseur des moyens d'espacement (40), dans une direction perpendiculaire à la première surface interne, a une dimension capillaire, c'est à dire entre 20 et 500 µm, de préférence entre 25 et 250 µm et de la manière préférée entre toutes entre 100 et 150 µm.

2. Dispositif à cartouche selon la revendication 1, dans lequel la première surface interne de la cavité (10) est une surface sensiblement plane.

3. Dispositif à cartouche selon la revendication 1 ou 2, dans lequel la largeur de l'ouverture (20) correspond sensiblement à la largeur de la cavité (10).

4. Dispositif à cartouche selon l'une quelconque des revendications 1 à 3, et comprenant en outre un élément de support (50) inséré dans ladite cavité (10) de manière à définir lesdits deux compartiments, dans lequel le premier et le second compartiments sont en communication fluidique via des espaces définis par des surfaces latérales de l'élément de support (50) perpendiculaires à la surface portant l'échantillon dudit élément de support (50) et des surfaces latérales opposées de la cavité (10) et optionnellement via un espace défini par la surface d'extrémité arrière de l'élément de support (50) et la surface interne de la paroi arrière (6) opposée à l'ouverture (20).

5. Dispositif à cartouche selon la revendication 4, dans lequel le second compartiment et optionnellement également le premier compartiment dans la cavité du logement est (sont) doté(s) d'une sortie de fluide et/ou d'un/de passage(s) de drainage permettant de retirer le/les fluide(s) usés et/ou de traitement des excédents et de rinçage des compartiments.

6. Dispositif à cartouche selon la revendication 5, dans lequel les moyens élastiques sont situés dans le second compartiment et viennent en prise avec et fléchissent contre la surface inférieure de l'élément de support (50).

7. Dispositif à cartouche selon la revendication 6, dans lequel lesdits moyens élastiques dans le second compartiment comprennent un ressort courbé plat (30).

8. Dispositif à cartouche selon la revendication 7, dans lequel l'extrémité (31) du ressort courbé plat (30) est fixée sur une surface interne du second compartiment éloignée de l'ouverture (20) dans le logement, moyennant quoi l'autre extrémité du ressort est fixe ou libre et est configurée de manière à ce qu'une partie du ressort courbé plat vienne en prise avec et fléchisse contre l'élément de support portant l'échantillon.

9. Dispositif à cartouche selon la revendication 8, dans lequel l'autre extrémité (32) du ressort (30) butte contre la face intérieure de la paroi d'extrémité avant (7) tout en reposant sur la surface inférieure interne de la cavité, c'est à dire la surface interne de la paroi inférieure (3).

10. Dispositif à cartouche selon l'une quelconque des revendications 5 à 9, dans lequel les moyens élastiques dans le second compartiment sont un agencement d'éléments élastiques sélectionnés dans le groupe comprenant des ressorts hélicoïdaux et plats, des tampons ou pièces solides et en mousse, dont au moins une partie est attachée à la surface interne de la paroi inférieure (3), moyennant quoi une autre partie de chaque élément élastique fait saillie vers l'avant et vient en prise avec et fléchit contre l'élément de support portant l'échantillon (50), et dans lequel la force élastique du/des ressort(s), des tampons ou des pièces situés à proximité de l'ouverture dans le logement est sensiblement inférieure à celle du/des ressort(s), tampons ou pièces plus éloignés de l'ouverture dans le compartiment.

11. Dispositif à cartouche selon la revendication 10, dans lequel la/les parties libre(s) (33) des éléments élastiques (30) s'étendant vers l'élément de support portant l'échantillon (50) dans le second compartiment est (sont) recouverte(s) par un élément en feuilles.

12. Dispositif à cartouche selon l'une quelconque des revendications précédentes, dans lequel la hauteur de l'ouverture est sensiblement supérieure à l'épaisseur de l'élément de support (50).

13. Dispositif à cartouche selon l'une quelconque des revendications précédentes 4 à 12, dans lequel un élément de support fixe pour un élément de support portant l'échantillon (50) est prévu à l'extrémité arrière de la cavité, à l'opposé de l'ouverture du logement, le moyen de support ayant la forme d'une arête, crête, came ou de protubérances séparées, qui soutiennent l'extrémité arrière de l'élément de support (50) lorsqu'il est entièrement inséré dans la cavité dans le logement.

14. Dispositif à cartouche selon l'une quelconque des revendications précédentes 4 à 13, dans lequel un rideau souple ou un élément de fermeture résilient est prévu au niveau de l'ouverture de manière à entrer en contact avec et à fléchir contre la surface inférieure de l'élément de support (50) de façon à ce que le second compartiment soit sensiblement hermétiquement fermé ou rendu étanche au niveau de l'ouverture contre des influences externes.

15. Dispositif à cartouche selon l'une quelconque des revendications précédentes 4 à 14, dans lequel un moyen permettant de contrôler la température de tout fluide et de l'échantillon dans le premier compartiment est prévu.

16. Dispositif à cartouche selon la revendication 15, dans lequel le moyen permettant de contrôler la température comprend des moyens de chauffage électrique et des moyens de détection de la température prévus dans une ou plusieurs des parois du logement formant la/les surface(s) du premier compartiment.

17. Dispositif à cartouche selon la revendication 15, dans lequel le moyen permettant de contrôler la température comprend des moyens de circulation d'eau et des moyens de détection de la température prévus dans une ou plusieurs des parois du logement formant la/les surface(s) du premier compartiment.

18. Dispositif à cartouche selon l'une quelconque des revendications 15 à 17, dans lequel la/les paroi(s) du logement formant la/les surface(s) du premier compartiment ou une partie de celui-ci est (sont) constituée(s) par un matériau ayant une bonne conductivité thermique, par exemple un métal tel que l'aluminium et l'acier inoxydable.

19. Dispositif à cartouche selon l'une quelconque des revendications précédentes, dans lequel le logement et la cavité à l'intérieur de celui-ci ont la forme d'une boîte rectangulaire et l'ouverture dans le logement est rectangulaire.

20. Dispositif à cartouche selon la revendication 1, dans lequel le logement est constitué par un plastique tel que, par exemple, du polystyrène, des polyméthylmétacrylates, des polycarbonates (Plexiglas, Lexan), et des polyéthersulfones.

21. Dispositif à cartouche selon la revendication 1, dans lequel la première surface interne de la cavité, c'est à dire la surface interne de la paroi supérieure 2, est sensiblement plane au moins sur une partie centrale.

22. Ensemble comprenant une pluralité de dispositifs à cartouches selon l'une quelconque des revendications 1 à 21 empilés verticalement, c'est à dire selon une relation l'un au-dessus de l'autre.

23. Ensemble comprenant une pluralité de dispositifs à cartouche selon l'une quelconque des revendications 1 à 21 agencés horizontalement, c'est à dire selon une relation côte à côte.

24. Ensemble comprenant une pluralité de dispositifs à cartouche selon l'une quelconque des revendications 1 à 21 agencés à la fois horizontalement et verticalement dans un agencement en boîte.
